# EUROPEAN PATENT APPLICATION

(11) **EP 3 960 114 A1**
(43) Date of publication of application: **02.03.2022**
(21) Application number: 21194360.0
(22) Date of filing: 01.09.2021
(51) Int. Cl.: A61C 5/00

(54) **PATIENT SPECIFIC DENTAL APPLIANCES**

(30) Priority: 01.09.2020 US 202063073253 P; 23.11.2020 US 202063117126 P
(71) Applicant: Dean UltraThin Retainer, LLC, Fosston, MN 56542 (US)
(72) Inventor: Sandwick, Todd, Fosston, 56542 (US)
(74) Representative: Neilson, Martin Mark

(57) **Abstract**

Patient specific dental appliances and methods for manufacturing the dental appliances. The dental appliances can be unilateral or bilateral space maintainers, fixed dental retainers, or other dental appliances. The dental appliances are manufactured based on the specific anatomy of each patient so that the dental appliances more closely conform to the patient's anatomy. The dental appliances include a first tooth securing portion that is configured to be secured to a first tooth of a patient, and a wire secured to and extending from the first tooth securing portion. The wire has a varying cross-sectional shape along at least a portion thereof, for example a flat section on a tooth-facing side of the wire. The wire can also include a scalloped portion with indentations and projections. The wire can also include an occlusal rest.

## Description

### Field

This technical disclosure relates to dental appliances, such as space maintainers, retainer and other appliances, which are manufactured specifically to match anatomy of a patient intended to wear the dental appliance.

### Background

Dental appliances (also known as orthodontic appliances) have been in use for years in the dentistry field for providing a variety of benefits, for example retention after completion of an active phase of orthodontic treatment. Some dental appliances are manufactured in a "generic" manner whereby the dental appliances do not match the specific anatomy of the patient.

### Summary

Patient specific dental appliances and methods for manufacturing the dental appliances are described. The dental appliances are manufactured based on the specific anatomy of each patient so that the dental appliances more closely conform to the patient's anatomy. The dental appliances can be any dental appliances that are worn by patients during a course of dental/orthodontic treatment.

The term "dental appliance" is used herein interchangeably with "orthodontic appliance" and is intended to encompass any device used in dental/orthodontic treatment. Non-limiting examples of dental appliances include, but are not limited to, space maintainers, palatal expanders, distalizing appliances, retainers, habit appliances, and other dental appliances. In one specific embodiment, the dental appliances can be space maintainers that are used in the mouth to preserve and maintain space. In another specific embodiment, the dental appliance can be a fixed retainer.

The dental appliances described herein can be integrally formed of a single material. Examples of materials that can be used to form the dental appliances include, but are not limited to, metals including but not limited to pure metals such as gold, platinum, or titanium or metal alloys such as stainless steel, nickel titanium or a cobalt, chromium, molybdenum alloy; graphene; carbon; carbon fiber; plastic; and ceramic. In one non-limiting embodiment, the dental appliances can be integrally formed of metal.

The dental appliances described herein can be integrally formed of a single material so as to form a single piece unitary construction. For example, the dental appliances can be integrally formed by a suitable additive manufacturing process. Additive manufacturing as used herein is intended to encompass any process where the dental appliance is created by adding layer-uponlayer of material to create the dental appliance. Additive manufacturing may also be referred to as 3D printing. In another embodiment, the dental appliances described herein can be created using a subtractive manufacturing process. In additional embodiments, the dental appliances described herein can be created using other manufacturing techniques as well, for example by casting.

In one embodiment, a dental appliance described herein can include a first tooth securing portion configured to be secured to a first tooth of a patient, and a wire secured to and extending from the first tooth securing portion. The wire can include a flat section on a tooth-facing side of the wire.

The dental appliance can be formed by integrally forming a first tooth securing portion and a wire from a material such as metal, wherein the first tooth securing portion is configured to be secured to a first tooth of a patient and the wire extends from the first tooth securing portion. The wire is formed to include a flat section on a tooth-facing side of the wire. The wire can also be formed to have cross-sectional shapes other than circular including, but not limited, square, rectangular, triangular, oval, and others.

In another embodiment, a dental appliance described herein can include a first tooth securing portion configured to be secured to a first tooth of a patient, a second tooth securing portion configured to be secured to a second tooth of the patient, and a wire having a first end secured to and extending from the first tooth securing portion and a second end secured to and extending from the second tooth securing portion. The wire includes a section between the first end and the second end that includes a plurality of indentations and projections that are shaped to anatomy of the patient.

The dental appliance can be formed by integrally forming a first tooth securing portion, a second tooth securing portion, and a wire from a material such as metal. The first tooth securing portion is configured to be secured to a first tooth of a patient, the second tooth securing portion is configured to be secured to a second tooth of the patient, and the wire includes a first end that extends from the first tooth securing portion and a second end that extends from the second tooth securing portion. In addition, the wire is formed to include a section between the first end and the second end that includes a plurality of indentations and projections that are shaped to anatomy of the patient.

### Drawings

Figure 1 is a view of a dental appliance described herein in place on a digital model of a patient's teeth.
Figure 2 is a view of the dental appliance of Figure 1.
Figure 3 is a view of the other side of the dental appliance in Figures 1-2.
Figure 4 is a cross-section taken along the line 4-4 in Figure 2.
Figure 5 is a cross-section taken along the line 5-5 in Figure 2.
Figure 6 is a view of another embodiment of a dental appliance described herein in place on a partial digital model of a patient's teeth.
Figure 7 is a view of the dental appliance of Figure 6.
Figure 8 is a side view of the dental appliance of Figures 6 and 7 in place on the partial digital model of a patient's teeth.
Figure 9 is a perspective view of a lower set of teeth with a dental appliance in the form of a fixed orthodontic retainer shown on the lingual surfaces of a subset of the lower teeth.
Figure 10 is a perspective view of a portion of the dental appliance of Figure 9.

### Detailed Description

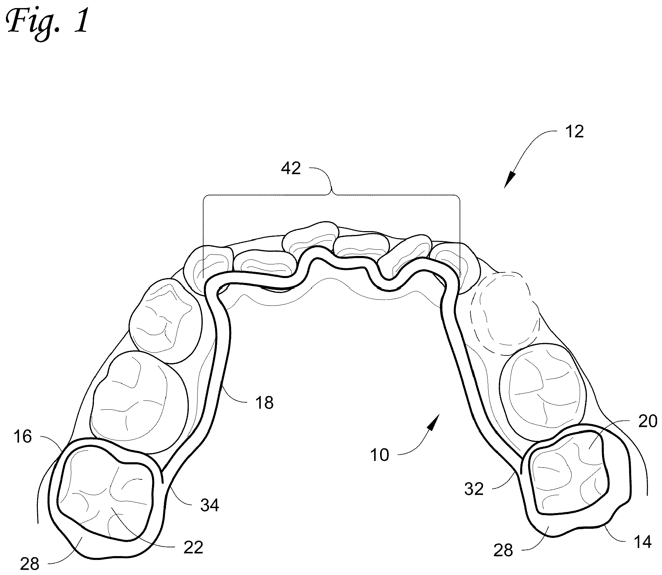

The following is a description of patient specific dental appliances and methods for manufacturing the dental appliances. The dental appliances are manufactured based on the specific anatomy of each patient so that the dental appliances more closely conform to the patient's anatomy. The dental appliances can be any dental appliances that are worn by patients during a course of dental/orthodontic treatment. The dental appliances can be, but are not limited to, space maintainers (Figures 1-3 and 6-8), palatal expanders, distalizing appliances, retainers, habit appliances, and other dental appliances. The dental appliances described herein can be designed for use with a patient's upper set of teeth or lower set of teeth.

The dental appliances described herein can be formed from any material that provides the requisite durability and strength for the dental appliances. In one embodiment, the material can be metal. The metal can be any metal suitable for use in dental applications and that provides the requisite durability and strength to perform the functions of the dental appliances described herein. Examples of metals that can be used include, but are not limited to, gold, platinum, titanium, and metal alloys such as stainless steel, or an alloy primarily composed of cobalt, chromium and molybdenum. In another embodiment, the material can be a non-metallic material including, but not limited to, plastic, graphene, carbon, and carbon fiber.

Referring initially to Figures 1-5, a first embodiment of a dental appliance 10 is illustrated. In this embodiment, the dental appliance 10 is configured as a bilateral space maintainer for the mandibular teeth. The general construction of bilateral space maintainers for mandibular teeth is known in the art.

The dental appliance 10 is shown in position on a digital model 12 of a patient's set of teeth which are depicted as the lower set of teeth (i.e. mandibular teeth). However, in other embodiments the dental appliance can be configured for use with the upper set of teeth (i.e. the maxillary teeth). The digital model can be created using conventional digital scanning techniques such as performing a scan of an impression of the patient's set of teeth, using an intra-oral digital scanner to intraorally scan the patient's set of teeth, or digitally scanning a model of the patient's teeth. Examples of intra-oral scanners include, but are not limited to, Planmeca's PlanScan, 3Shape's TRIOS, Sirona's Apollo DI and OmniScan, Invisalign's Itero and 3M's True Definition Scanner. Techniques for generating digital models of patient's teeth are well known in the art. As depicted in dashed lines in Figure 1, one or more of the teeth can be missing, and the bilateral space maintainer maintains the spacing of the remaining teeth. However, the bilateral space maintainer can be used with all of the patient's teeth present.

The dental appliance 10 is illustrated as including a first tooth securing portion in the form of a dental band 14, a second tooth securing portion in the form of a dental band 16, and a rigid wire 18 secured to the dental bands 14, 16. In the illustrated example, the dental bands 14, 16 are configured to be secured to opposite molar teeth 20, 22 of the patient. However, the dental bands 14, 16 can be configured to be secured to other teeth. The dental bands 14, 16 can be secured to the teeth 20, 22 using dental bonding materials known in the art.

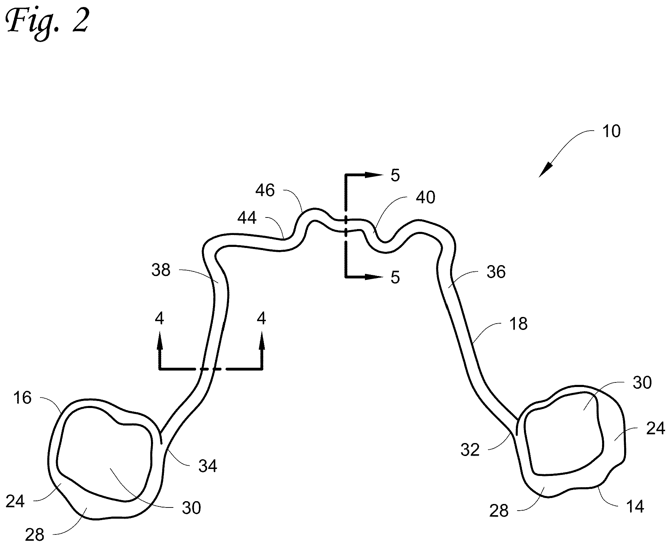

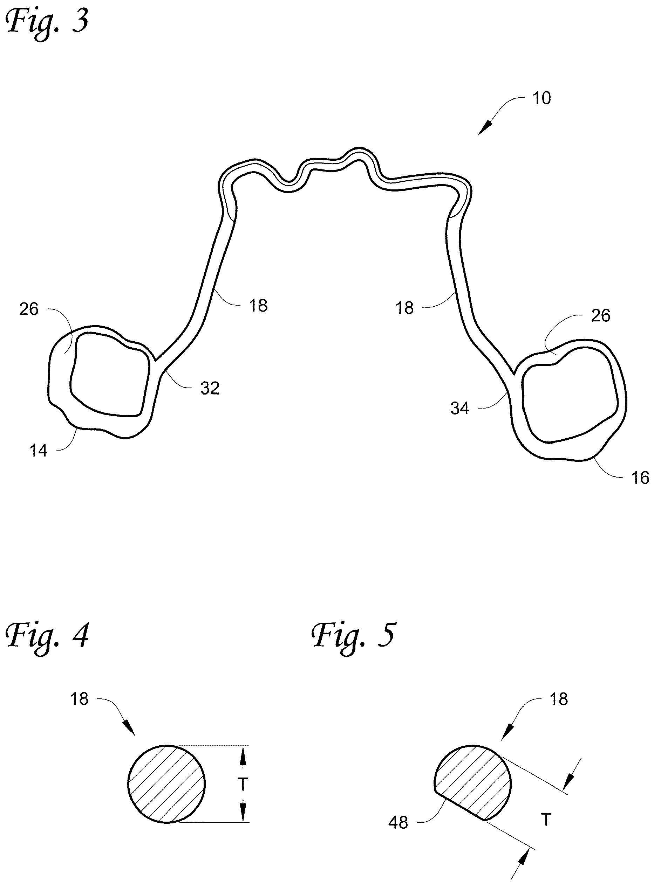

In one embodiment, the dental bands 14, 16 can be specifically configured to match some or all of the tooth surfaces around which the bands are disposed. For example, a digital scan of each tooth can be obtained and the bands 14, 16 can then be manufactured, for example by additive manufacturing, to match the surfaces of the teeth 20, 22. Referring to Figures 2 and 3, each of the bands 14, 16 includes an outer surface 24 that faces away from the tooth surfaces and an inner surface 26 that faces the tooth surfaces. At least the inner surfaces 26, and preferably both of the surfaces 24, 26, are configured to match the buccal and lingual surfaces of the respective teeth 20, 22. As best seen in Figures 1-2, the bands 14, 16 can also optionally include occlusal portions 28 surrounding an occlusal hole 30. The occlusal portions 28, if provided, are configured to match and cover portions of the inner and outer occlusal surfaces of the teeth 20, 22. In some embodiments, the occlusal portions 28 may be configured to match and cover functional and non-functional cusps of the teeth 20, 22. Space may be provided between the inner surfaces 26 and the tooth surfaces to provide space for cement or other material for attaching the bands 14, 16 to the teeth.

The dental bands 14, 16 can be configured to extend around the entire circumference of the tooth as depicted in Figure 1. In other embodiments, the dental bands 14, 16 can be configured to extend around only a portion of the circumference of the tooth.

In other embodiments, traditional dental bands can be used. Traditional dental bands are not patient specific and are not configured to match the tooth surfaces of the patient. In addition, traditional dental bands do not cover the inner and outer occlusal surfaces of the teeth 20, 22 or cover functional and non-functional cusps of the teeth 20, 22.

Returning to Figures 1-3, the wire 18 has a first end 32 secured to, for example integrally formed with, and extending from the dental band 14, and a second end 34 secured to, for example integrally formed with, and extending from the dental band 16. In the case of the dental appliance 10 being a space maintainer, the wire 18 is substantially rigid to help the appliance perform its space maintaining function.

The wire 18 includes a pair of lateral portions 36, 38 and a section 40 between the first end 32 and the end second 34. The section 40 is between the lateral portions 36, 38. The section 40 is positioned to contact anterior permanent incisors 42 of the patient, and the section 40 includes a plurality of indentations 44 and projections 46 that are shaped to lingual surfaces of the anterior permanent incisors 42. The section 40 can also be referred to as a scalloped section of the wire 18. In traditional bilateral space maintainers, the section that faces the anterior permanent incisors is straight and linear and may contact only portions of the incisors of the patient. In contrast, the section 40 is non-linear and is configured to more closely match the specific anatomy of the patient so that the wire 18 fits the patient better due to being manufactured by additive manufacturing.

The wire 18 can be referred to as having a non-constant or varying cross-sectional shape along at least a portion thereof between the ends 32, 34, excluding manufacturing tolerances and other unintentional variations. In embodiments where the wire 18 is generally circular in cross-section, the wire 18 can be referred to as having a non-constant or varying diameter along at least a portion thereof between the ends 32, 34, excluding manufacturing tolerances and other unintentional variations.

For example, referring to Figure 4, certain portions of the wire 18 can be circular in cross-section. For example, the lateral portions 36, 38 can be circular in cross-section as depicted in Figure 4. Some or all of the section 40 may also be circular in cross-section. In other embodiments, a portion of the section 40 may vary in diameter. For example, referring to Figure 5, the section 40 of the wire 18 that faces the anterior permanent incisors 42 may be formed with a flat section 48. In use of the dental appliance 10, the flat section 48 can extend the entire length of the section 40 or only a portion of the length of the section 40. The flat section 48 permits the section 40 to fit the patient more closely and engage the patient's teeth with more surface area compared to a circular cross-section, making the fit of the dental appliance 10 on the patient more stable. In some embodiments, portions or all of the lateral portions 36, 38 may also include one or more flat sections similar to the flat section 48. However, the lateral portions 36, 38 do not contact the teeth or gums of the patient. Instead, a space is left between the lateral portions 36, 38 and the gums and the teeth for patient comfort and to facilitate cleaning. Because of the flat section(s), the wire 18 does not have a constant thickness T or diameter from one end to the other end; the wire 18 does not have constant dimensions from one end to the other; and the wire 18 varies in thickness T or diameter from one end to the other end thereof.

The matching of the dental bands 14, 16 to the patient's tooth surfaces, the formation of the section 40, and the formation of the flat section 48 is facilitated by using additive manufacturing to form the bands 14, 16, the section 40 and the flat section 48. In some embodiments, the bands 14, 16 and the wire 18 can be integrally formed together as a one-piece construction, for example using additive manufacturing. In other embodiments, the bands 14, 16 can be formed separately from the wire 18, with the ends of the wire 18 then being attached to the bands 14, 16.

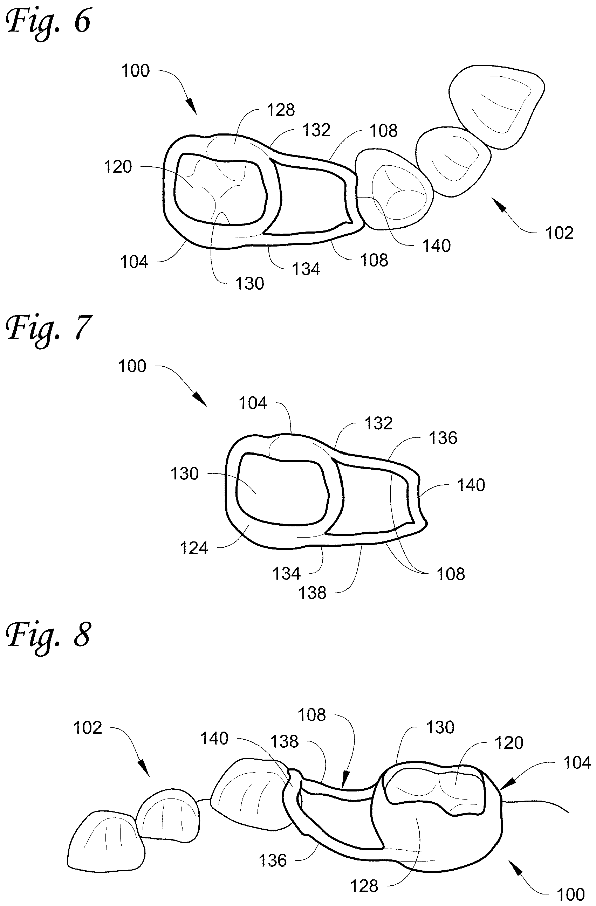

Referring to Figures 6-8, a second embodiment of a dental appliance 100 is illustrated. In this embodiment, the dental appliance 100 is configured as a unilateral space maintainer. The general construction of unilateral space maintainers is known in the art.

The dental appliance 100 is shown in position on a partial digital model 102 of a patient's set of teeth which can be either an upper set of teeth or a lower set of teeth. The partial digital model 102 can be created using conventional digital scanning techniques such as performing a scan of an impression of the patient's set of teeth, using an intra-oral digital scanner to intraorally scan the patient's set of teeth, or digitally scanning a model of the patient's teeth. Examples of intra-oral scanners include, but are not limited to, Planmeca's PlanScan, 3Shape's TRIOS, Sirona's Apollo DI and OmniScan, Invisalign's Itero and 3M's True Definition Scanner. Techniques for generating digital models of patient's teeth are well known in the art.

The dental appliance 100 is illustrated as including a tooth securing portion in the form of a dental band 104 and a rigid wire 108 secured to the dental band 104. In the illustrated example, the dental band 104 is configured to be secured to a molar tooth 120 of the patient. However, the dental band 104 can be configured to be secured to other teeth. The dental band 104 can be secured to the tooth 120 using dental bonding materials known in the art.

In one embodiment, as with the dental bands 14, 16 described above, the dental band 104 can be specifically configured to match some or all of the tooth surfaces around which the band is disposed. For example, a digital scan of the tooth can be obtained and the band 104 can then be manufactured, for example by additive manufacturing, to match the buccal and lingual surfaces of the tooth 120. Referring to Figures 6-8, the band 104 includes an outer surface 124 that faces away from the tooth surfaces and an inner surface (not visible) that faces the tooth surfaces. At least the inner surface, and preferably both the inner and outer surfaces 124, are configured to match the surfaces of the tooth 120. As best seen in Figures 6 and 8, the band 104 can also optionally include occlusal portions 128 surrounding an occlusal hole 130. The occlusal portions 128, if present, are configured to match and cover portions of the inner and outer occlusal surfaces of the tooth 120. In some embodiments, the occlusal portions 128 may be configured to match and cover functional and non-functional cusps of the tooth 120. Space may be provided between the inner surface of the band 104 and the tooth surface to provide space for cement or other material for attaching the band 104 to the tooth.

In other embodiments, traditional dental bands with tooth facing surfaces that are roughened or not roughened can be used. Traditional dental bands are not patient specific and are not configured to match the tooth surfaces of the patient. In addition, traditional dental bands do not cover the inner and outer marginal surfaces of the tooth 120 or cover functional and non-functional cusps of the tooth 120.

Returning to Figures 6-8, the wire 108 has a first end 132 secured to, for example integrally formed with, and extending from the dental band 104, and a second end 134 secured to, for example integrally formed with, and extending from the dental band 104. In the case of the dental appliance 100 being a space maintainer, the wire 108 is substantially rigid to help the appliance perform its space maintaining function. The wire 108 includes spaced apart lateral portions 136, 138. The space between the lateral portions 136, 138 provides lingual and tissue comfort when the appliance 100 is installed.

Certain portions of the wire 108 can be circular in cross-section. In other embodiments, portions of the wire 108 may be flat when the wire 108 is viewed in cross-section. For example, portions of the wire 108 facing the gums of the patient may be formed with a flat section similar to the flat section 48 in Figure 5. The flat section can extend the entire length of the wire 108 or only a portion of the length of the wire 108. This permits the wire 108 to fit the patient more closely compared to a circular cross-section, making the fit of the dental appliance 100 on the patient more stable. The wire 108 may also be scalloped (i.e. include a plurality of indentations and projections), with or without the flat section, to more closely match the patient's anatomy. Like the lateral portions 36, 38 of the wire 18, the wire 108 may not contact the teeth or gums of the patient. Instead, a space may be left between the lateral portions wire 108 and the gums and the teeth for patient comfort and to facilitate cleaning.

The wire 108 further includes a distal end that is formed into an occlusal rest or occlusal stop 140. The occlusal rest 140 keeps the appliance 100 from impinging on the soft gum tissues.

The matching of the dental band 104 to the patient's tooth surfaces, the formation of the wire 108, and the formation of the flat section thereon is facilitated by using additive manufacturing to form the band 104 and the wire 108. In some embodiments, the band 104 and the wire 108 can be integrally formed together as a one-piece construction, for example using additive manufacturing. In other embodiments, the band 104 can be formed separately from the wire 108, with the ends of the wire 108 then being attached to the band 104.

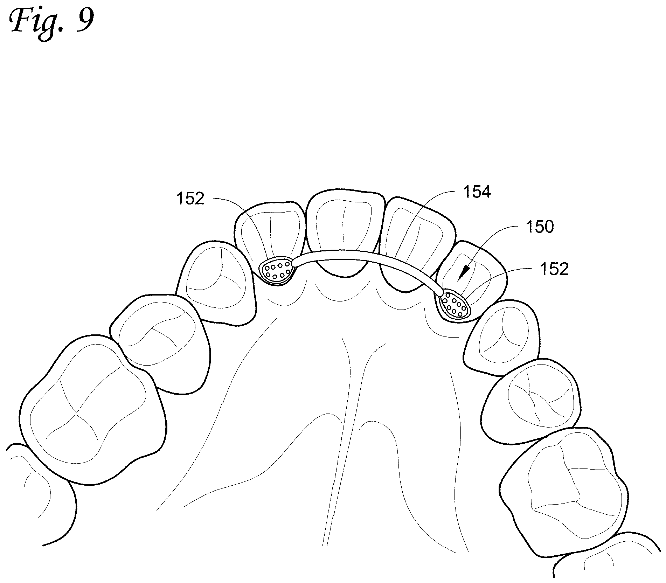

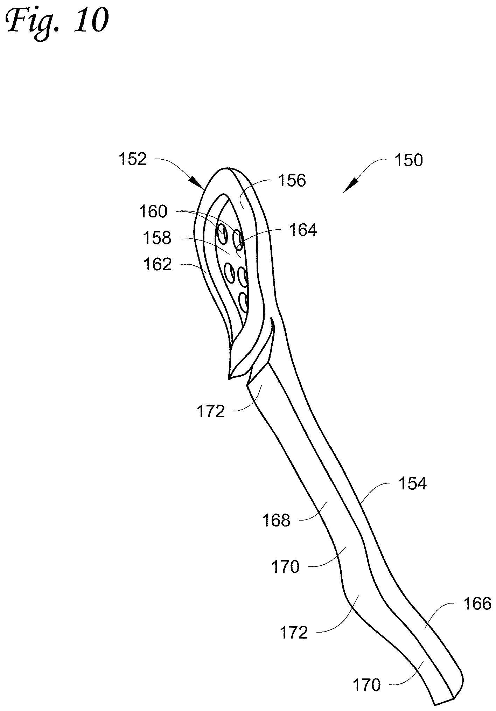

Figures 9 and 10 illustrate another example of a dental appliance 150 that can be constructed using the techniques described herein. In this example, the dental appliance 150 is in the form of a fixed orthodontic retainer which is depicted on the lingual surfaces of a subset of the lower teeth. The dental appliance 150 can also be configured to be disposed on the labial surfaces of the lower teeth, or the dental appliance 150 can be configured to be disposed on the lingual or labial surfaces of the upper set of teeth. Further information on a dental appliance in the form of a fixed orthodontic retainer on lingual or labial surfaces of lower or upper set of teeth is disclosed in U.S. Patent Application Publication No. 2020-0229903, the entire contents of which are incorporated herein by reference in their entirety.

The dental appliance 150 includes at least two tooth securing portions in the form of bonding pads 152 with a rigid retainer wire 154 extending between the bonding pads 152. Each bonding pad 152 includes a perimeter frame or boundary 156 that defines a perimeter of the bonding pad 152. A material 158 is disposed within the perimeter frame 156, and a plurality of apertures 160 are formed in the material 158. The apertures 160 extend completely through the bonding pad 152 in the thickness direction of the bonding pad 152 so that the front or first side of the bonding pad 152 is in communication with the rear or second side of the bonding pad 152 via the apertures 160. The material 158 together with the apertures 160 form what may be referred to as a mesh or a mesh portion of the bonding pad 152.

The bonding pads 152 are formed, for example by additive manufacturing (i.e. 3D printing) to match the tooth surfaces to which they are intended to be bonded. In particular, the perimeter frame 156 includes a tooth facing surface 162 that matches the contours of the corresponding tooth surface so that the surface 162 effectively sits against and seals with the tooth surface. In addition, the frame 156 is thicker in a direction from front to back compared to the thickness of the mesh portion to form a dished or recessed portion 164. The dished portion 164 provides an area to receive an adhesive, for example a radiation curable adhesive or a non-radiation curable adhesive, used to adhere the bonding pad 152 to the tooth surface. Since the perimeter frame 156 matches the tooth surface, the frame 156 will prevent leakage of the adhesive from the dished portion 164 until the adhesive sets or is cured.

The rigid retainer wire 154 is also formed by additive manufacturing, for example integrally formed with the bonding pads 152 to create a unitary, one-piece construction. The retainer wire 154 is shaped to the anatomy of the patient. For example, referring to Figure 10, the retainer wire 154 can have a half-round side 166 and a flat side 168. When the dental appliance 150 is properly positioned on the patient, the flat side 168 can face the patient's anatomy, for example their teeth, so that the dental appliance 150 fits the patient more closely, while the half-round side 166 faces away from the patient's teeth. In addition, the retainer wire 154 can include a plurality of indentations 170 and projections 172 so that the wire 154 more closely matches the anatomy of the patient and the wire 154 has a varying cross-sectional shape along at least a portion thereof. However, in use, the retainer wire need not contact the patient's anatomy (for example the tooth surfaces). Instead, the wire 154 can be spaced from the patient's anatomy. For example, the wire 154 can be spaced from the patient's anatomy a distance of about 0.2 mm. In some embodiments, portions of the wire 154, such as the projections 172, may contact the patient's anatomy while other portions of the wire 154, such as the indentations 170, do not contact the patient's anatomy.

To secure the dental appliance 150 to the teeth, a UV curable adhesive can be used. The UV curable adhesive can first be applied to the tooth surfaces to which the bonding pads 152 are to be secured, followed by placing the bonding pads 152 on the teeth over the applied adhesive. Alternatively, the UV curable adhesive can be applied to the tooth facing sides of the bonding pads 152, and then the bonding pads 12 are placed in position onto the lingual surfaces. Any means or sequence for applying the UV curable adhesive and the bonding pads 152 to the tooth surfaces can be utilized. Regardless of the sequence used, some of the UV curable adhesive remains between the tooth facing surfaces (or rear surface) of the bonding pads 152, while some of the UV curable adhesive flows upward through the apertures 160 and possibly onto the front surfaces of the bonding pads 152. UV radiation from a UV light source (which is known in the art) is then directed onto the bonding pads 152 and the UV curable adhesive. The UV radiation cures the radiation curable adhesive thereby adhering the bonding pads 152 to the lingual surfaces of the teeth. Other techniques for securing the bonding pads 152 to the tooth surfaces can be used.

Additional embodiments of the invention can include the following.

A dental appliance can comprise a first tooth securing portion configured to be secured to a first tooth of a patient; a second tooth securing portion configured to be secured to a second tooth of the patient; a wire having a first end secured to and extending from the first tooth securing portion and a second end secured to and extending from the second tooth securing portion; where the wire includes a section between the first end and the second that includes a plurality of indentations and projections.

In the dental appliance, first tooth securing portion, the second tooth securing portion, and the wire can consist of a metal material.

In addition, the first tooth securing portion, the second tooth securing portion, and the wire can be integrally formed of a metal material as a one-piece construction.

In addition, the dental appliance can be configured as a bilateral space maintainer.

In addition, the first tooth securing portion can be configured as a first dental band that surrounds the first tooth, and the second tooth securing portion can be configured as a second dental band that surrounds the second tooth.

In addition, the first tooth securing portion can be a first apertured bonding pad, and the second tooth securing portion can be a second apertured bonding pad.

In addition, a method of forming a dental appliance can comprise integrally forming a first tooth securing portion, a second tooth securing portion, and a wire from metal material; wherein the first tooth securing portion is configured to be secured to a first tooth of a patient, the second tooth securing portion is configured to be secured to a second tooth of the patient, and the wire includes a first end that extends from the first tooth securing portion and a second end that extends from the second tooth securing portion; and the wire is formed to include a section between the first end and the second end that includes a plurality of indentations and projections.

In addition, in the method, the first tooth securing portion, the second tooth securing portion, and the wire may be integrally formed by additive manufacturing.

In addition, in the method, the first tooth securing portion may comprise a first dental band that is formed to match buccal and lingual surfaces of the first tooth, and the second tooth securing portion may comprise a second dental band that is formed to match buccal and lingual surfaces of the second tooth.

In addition, in the method, the first dental band may be formed based on a scan of buccal and lingual surfaces of the first tooth and the second dental band may be based on a scan of buccal and lingual surfaces of the second tooth.

In addition, in the method the first tooth securing portion may be formed as a first apertured bonding pad and the second tooth securing portion may be formed as a second apertured bonding pad.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A dental appliance, comprising:
a first tooth securing portion configured to be secured to a first tooth of a patient;
a wire secured to and extending from the first tooth securing portion, the wire having:
a) a varying cross-sectional shape along at least a portion thereof; and/or
b) a plurality of indentations and projections along a portion thereof.

2. The dental appliance of claim 1, wherein the first tooth securing portion and the wire consist of a metal material.

3. The dental appliance of claim 1, wherein the first tooth securing portion and the wire are integrally formed of a metal material as a one-piece construction.

4. The dental appliance of claim 1, comprising a second tooth securing portion configured to be secured to a second tooth of the patient; the first tooth securing portion is a first dental band and the second tooth securing portion is a second dental band; the wire includes a first end secured to and extending from the first dental band and a second end secured to and extending from the second dental band, wherein the dental appliance is configured as a bilateral space maintainer.

5. The dental appliance of claim 4, wherein the portion of the wire with the plurality of indentations and projections is positioned to contact anterior permanent incisors of the patient, and the plurality of indentations and projections are shaped to lingual surfaces of the anterior permanent incisors.

6. The dental appliance of claim 1, wherein the first tooth securing portion is a first dental band, and the dental appliance is configured as a unilateral space maintainer.

7. The dental appliance of claim 6, wherein the wire includes a first end secured to the first dental band, a second end secured to the first dental band, and a distal end spaced from the first end and the second end.

8. The dental appliance of claim 7, wherein the distal end is configured as an occlusal rest.

9. The dental appliance of claim 1, wherein the first tooth securing portion comprises an apertured bonding pad.

10. A method of forming a dental appliance, comprising:
integrally forming a first tooth securing portion and a wire from metal material, wherein the first tooth securing portion is configured to be secured to a first tooth of a patient and the wire extends from the first tooth securing portion; and the wire is formed to have:
a) a varying cross-sectional shape along at least a potion thereof; and/or
b) a plurality of indentations and projections along a portion thereof.

11. The method of claim 10, wherein the first tooth securing portion and the wire are integrally formed as a one-piece construction by additive manufacturing.

12. The method of claim 10, wherein the first tooth securing portion is a first dental band that is formed to match buccal and lingual surfaces of the first tooth.

13. The method of claim 12, comprising forming the first dental band based on a scan of buccal and lingual surfaces of the first tooth.

14. The method claim 10, further comprising integrally forming a second tooth securing portion with the wire; wherein the second tooth securing portion is configured to be secured to a second tooth of the patient.

15. The method of claim 14, wherein:
the first tooth securing portion comprises a first dental band that is formed to match buccal and lingual surfaces of the first tooth, and the second tooth securing portion comprises a second dental band that is formed to match buccal and lingual surfaces of the second tooth; or
forming the first tooth securing portion as a first apertured bonding pad and forming the second tooth securing portion as a second apertured bonding pad.
